# EUROPEAN PATENT APPLICATION

(11) **EP 2 519 050 A1**
(43) Date of publication of application: **31.10.2012**
(21) Application number: 10839415.6
(22) Date of filing: 21.12.2010
(51) Int. Cl.: H04W 28/06, H04W 72/04

(54) **MOBILE STATION, WIRELESS BASE STATION, AND MOBILE COMMUNICATION METHOD**

(30) Priority: 22.12.2009 JP 2009291486
(71) Applicant: NTT DOCOMO, INC., Chiyoda-ku Tokyo 100-6150 (JP)
(72) Inventor: ISHII, Hiroyuki, Tokyo 100-6150 (JP); MIKI, Nobuhiko, Tokyo 100-6150 (JP)
(74) Representative: HOFFMANN EITLE
(86) International application number: PCT/JP2010/073039
(87) International publication number: WO 2011/078185

(57) **Abstract**

To achieve system efficiency by avoiding inefficient resource assignment of "Carrier Segment/Extension Carrier". A mobile station UE according to the present invention includes a control signal reception unit 11 configured to receive a downlink control signal for notifying the transmission of downlink data from a radio base station eNB, and a reception unit 13 configured to receive the downlink data based on the received downlink control signal, wherein the downlink control signal includes bits indicating the assignment or non-assignment of the "Carrier Segment/Extension Carrier", in addition to resource assignment information "RB assignment information of the normal "Component Carrier".

## Description

### TECHNICAL FIELD

The present invention relates to a mobile communication technology field, and particularly, to a mobile station, a radio base station, and a mobile communication method in a mobile communication system using the next generation mobile communication technology.

### BACKGROUND ART

A communication scheme, which is the next generation of a WCDMA (Wideband Code Division Multiplexing Access) scheme, an HSDPA (High-Speed Downlink Pcket Access) scheme, an HSUPA (High-Speed Uplink Pcket Access) scheme and the like, that is, an LTE (Long Term Evolution) scheme has been discussed in the 3GPP, which is a group aiming to standardize the WCDMA, and the specification work is under progress.

As a radio access scheme in the LTE scheme, an OFDMA (Orthogonal Frequency Division Multiplexing Access) scheme has been defined for a downlink, and an SC-FDMA (Single-Carrier Frequency Division Multiple Access) scheme has been defined for an uplink.

The OFDMA scheme denotes a multicarrier transmission scheme in which a frequency band is divided into a plurality of narrow frequency bands (sub-carriers), and data is loaded on each sub-carrier for transmission. According to the OFDMA scheme, sub-carriers are densely arranged on the frequency axis while being orthogonal to one another, so that high-rate transmission is achieved, resulting in the improvement of frequency use efficiency.

The SC-FDMA scheme denotes a single carrier transmission scheme in which a frequency band is divided for each terminal, and transmission is performed using different frequency bands among a plurality of mobile stations UEs (User Equipments). According to the SC-FDMA scheme, since it is possible to easily and efficiently reduce interference among the mobile stations UEs and suppress variation in transmission power, the SC-FDMA scheme is advantageous in terms of low power consumption of a mobile station UE, expansion of coverage and the like.

The LTE scheme corresponds to a system in which a plurality of mobile stations UEs share one or two or more physical channels in an uplink and a downlink, and perform communication.

The channel shared by the plurality of mobile stations UEs is generally called a "shared channel", and in the LTE scheme, the channel is "Physical Uplink Shared Channel (PUSCH)" in an uplink, and is "Physical Downlink Shared Channel (PDSCH)" in a downlink.

Furthermore, as a transport channel, the shared channel is UL-SCH (Uplink Shared Channel) in an uplink, and is DL-SCH (Downlink Shared Channel) in a downlink.

In a communication system using the above-mentioned shared channel, it is necessary to select a mobile station UE to which the shared channel is to be assigned in each sub-frame (1 ms in the LTE scheme), and to perform signaling to the effect that the shared channel is assigned to the selected mobile station UE.

In the LTE scheme, a control channel used for the signaling is called "PDCCH (Physical Downlink Control Channel)" or "DL L1/L2 Control Channel (Downlink L1/L2 Control Channel)".

In addition, the above-mentioned process for selecting the mobile station UE to which the shared channel is to be assigned in each sub-frame is generally called "scheduling". Furthermore, the above-mentioned expression indicating the "the shared channel is to be assigned" may be expressed as the "a radio resource for the shared channel is to be assigned".

Information on the physical downlink control channel, for example, includes "Downlink Scheduling Information" or "Uplink Scheduling Grant".

The "Downlink Scheduling Information", for example, includes assignment information of a downlink resource block related to a downlink shared channel, UE-ID, the number of streams, information on a precoding vector, a data size, a modulation scheme, and information on HARQ (hybrid automatic repeat request).

Furthermore, the "Uplink Scheduling Grant", for example, includes assignment information of an uplink resource block related to an uplink shared channel, UE-ID, a data size, a modulation scheme, uplink transmission power information, and information on a demodulation reference signal in Uplink MIMO.

In addition, the above-mentioned "Downlink Scheduling Information" or "Uplink Scheduling Grant" may also be collectively called "DCI (Downlink Control Information)".

Furthermore, as a next-generation communication scheme of the LTE scheme, an LTE-advanced scheme has been discussed in the 3GPP.

In the LTE-advanced scheme, performing "Carrier aggregation" has been agreed as the requirements. Here, the "Carrier aggregation" represents that communication is simultaneously performed using a plurality of carriers.

For example, when the "Carrier aggregation" is performed in the uplink, since the mobile station UE performs transmission using a plurality of carriers different from one another in each "Component Carrier", the mobile station UE transmits an uplink signal using the plurality of carriers.

Alternatively, for example, when the "Carrier aggregation" is performed in the downlink, since a radio base station eNB performs transmission using a plurality of carriers different from one another in each "Component Carrier", the mobile station UE receives a downlink signal using the plurality of carriers.

However, in the LTE, 6 RBs, 15 RBs, 25 RBs, 50 RBs, 75 RBs, and 100 RBs have been defined as a system bandwidth (a channel bandwidth). In addition, 1 RB (Resource Block) corresponds to 180 kHz.

In principle, "Component Carrier" in the LTE-advanced scheme corresponds to one carrier of the LTE, and a bandwidth of the "Component Carrier" has been proposed to be equal to the above-mentioned channel bandwidth.

Here, for example, when a band of 40 MHz exists, it may be considered that 100 RBs, 100 RBs, and 6 RBs are set as a combination of the above-mentioned "Component Carriers".

In this case, in the above-mentioned 6 RBs, since the transmission of a synchronization signal or a common channel signal such as broadcast information causes the waste of a radio resource, it has been discussed that the "Component Carriers" of the above-mentioned 6 RBs are defined as "Carrier Segment" or "Extension Carrier".

In the above-mentioned "Carrier Segment" or "Extension Carrier", in order to reduce overhead due to the synchronization signal or the common channel signal such as broadcast information, it has been discussed that the common channel signal is not transmitted.

Furthermore, for the above-mentioned "Carrier Segment" or "Extension Carrier", in order to avoid the waste of a radio resource due to the additional transmission of a physical downlink control channel (PDCCH) signal, it has been proposed that one physical downlink control channel (PDCCH) signal is collectively transmitted for a normal "Component Carrier", and the "Carrier Segment" or the "Extension Carrier".

However, the above-mentioned conventional mobile communication system has the following problems.

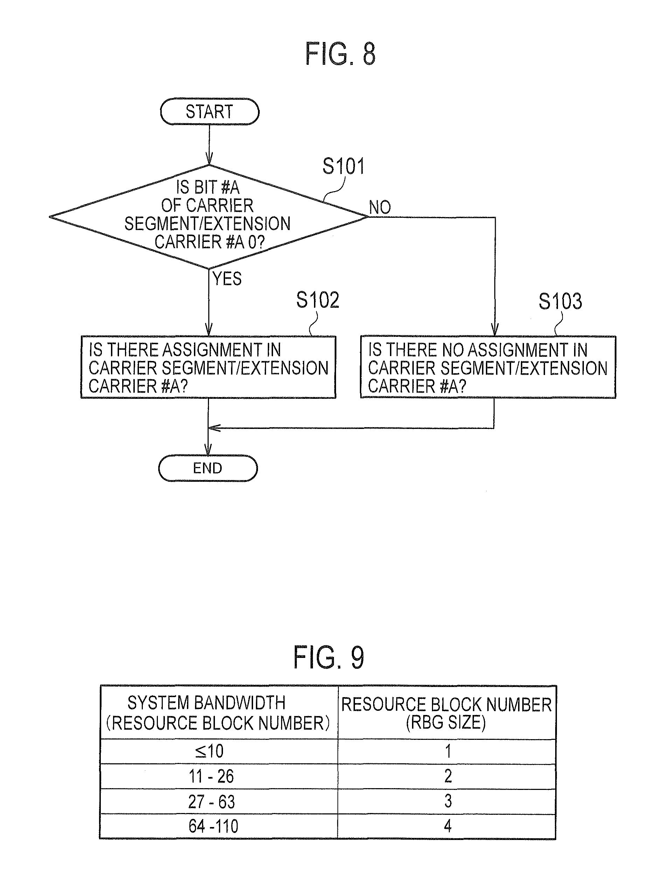

In the resource assignment of the normal "Component Carrier", a size when the number of resource blocks is grouped is decided according to the number of the resource blocks in a system bandwidth as illustrated in Fig. 9, and the resource blocks are assigned to each group of the grouped resource blocks.

For example, when the system bandwidth is 5 MHz, since the number of resource blocks is "25", a resource block size is "2".

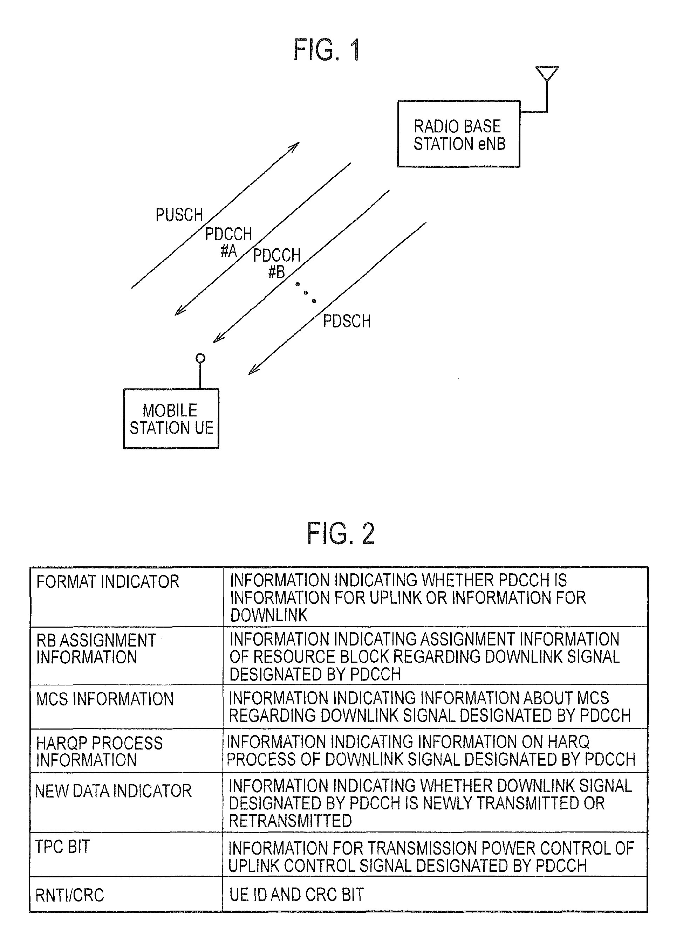

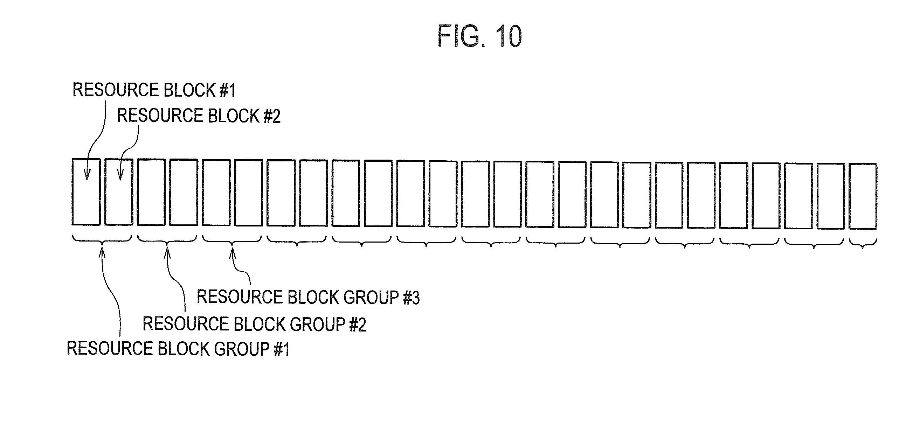

In this case, in the resource assignment, as illustrated in Fig. 10, 1 bit is defined for each resource group including two resource blocks, and whether there is resource assignment is designated based on the value of the 1 bit.

That is, bits #1, #2, #3, ... are defined for resource block groups #1, #2, #3, ... to designate the assignment or non-assignment of a resource block, and the assignment or non-assignment of a resource is designated according to "0" or "1" which is a value of the bits #1, #2, #3,

More specifically, when the above-mentioned bit has a value of "0", it may be designated that there is resource assignment. When the above-mentioned bit has a value of "1", it may be designated that there is no resource assignment.

However, when the "Carrier Segment" or the "Extension Carrier" is added to the normal "Component Carrier", since resource block sizes of the both are different from each other, resulting in a problem that it is not possible to efficiently assign a resource.

Hereinafter, the "Carrier Segment" will be described. In addition, when one PDCCH signal is notified by combining the normal "Component Carrier" with the "Extension Carrier", the same problems occur even in relation to the "Extension Carrier".

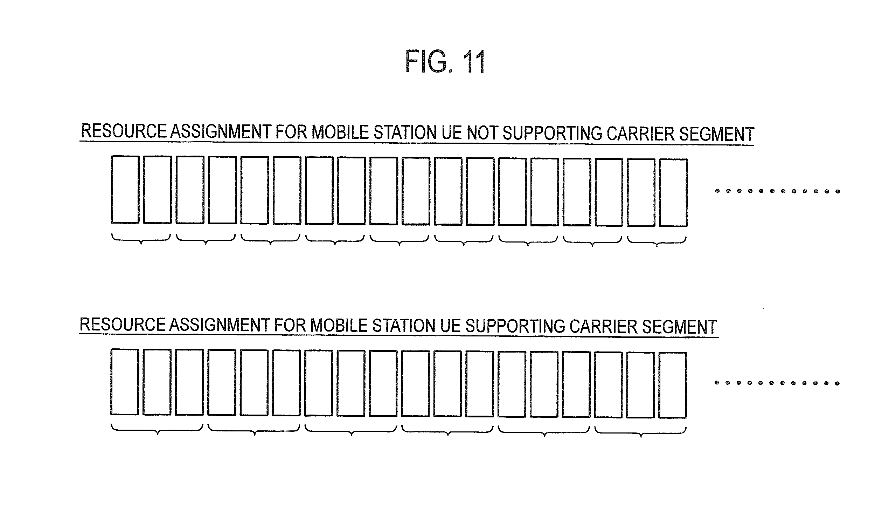

For example, when the number of resource blocks of the normal "Component Carrier" is "25" and the number of resource blocks of the "Carrier Segment" is "6", since the total number of the resource blocks is "31", a resource block size is "3" as illustrated in Fig. 9.
In this case, as illustrated in Fig. 11, in relation to resource assignment for a mobile station UE not supporting the "Carrier Segment", resource assignment is performed in each resource block group grouped by two resource blocks. In relation to resource assignment for a mobile station UE supporting the "Carrier Segment", resource assignment is performed in each resource block group grouped by three resource blocks.

At this time, when there exist the mobile station UE not supporting the "Carrier Segment" and the mobile station UE supporting the "Carrier Segment", it is difficult to seamlessly assign resource blocks, resulting in a reduction of system efficiency.

In addition, the mobile station UE not supporting the "Carrier Segment", for example, may be a mobile station UE having not Capability of the LTE-advanced scheme but only Capability of the LTE scheme.

### SUMMARY OF THE INVENTION

Therefore, the present invention has been achieved in view of the above-described problems, and an object thereof is to provide a mobile station, a radio base station, and a mobile communication method, by which it is possible to achieve system efficiency by efficiently assigning a resource in "Carrier Segment" or "Extension Carrier" added in order to effectively use a frequency resource.

A first characteristic of the present embodiment is summarized in that a mobile station, which is configured to perform downlink communication with respect to a radio base station using a normal carrier and an additional carrier, comprising, a control signal reception unit configured to receive a downlink control signal for notifying transmission of downlink data from the radio base station; and a reception unit configured to receive the downlink data based on the received downlink control signal, in which the downlink control signal includes a bit indicating assignment or non-assignment of the additional carrier, in addition to resource assignment information of the normal carrier.

A second characteristic of the present embodiment is summarized in that a mobile station, which is configured to perform uplink communication with respect to a radio base station using a normal carrier and an additional carrier, comprising, a control signal reception unit configured to receive a downlink control signal for instructing transmission of uplink data from the radio base station; and a transmission unit configured to transmit the uplink data based on the received downlink control signal, in which the downlink control signal includes a bit indicating assignment or non-assignment of the additional carrier, in addition to resource assignment information of the normal carrier.

A third characteristic of the present embodiment is summarized in that a radio base station, which is configured to perform downlink communication with respect to a mobile station using a normal carrier and an additional carrier, comprising, a control signal transmission unit configured to transmit a downlink control signal for notifying transmission of downlink data to the mobile station, and a transmission unit configured to transmit the downlink data, in which the downlink control signal includes a bit indicating assignment or non-assignment of the additional carrier, in addition to resource assignment information of the normal carrier.

A fourth characteristic of the present embodiment is summarized in that a radio base station, which is configured to perform uplink communication with respect to a mobile station using a normal carrier and an additional carrier, comprising:
a control signal transmission unit configured to transmit a downlink control signal for instructing transmission of uplink data to the mobile station; and
a configured to receive the uplink data, wherein
the downlink control signal includes a bit indicating assignment or non-assignment of the additional carrier, in addition to resource assignment information of the normal carrier.

A fifth characteristic of the present embodiment is summarized in that a mobile communication method in a mobile station, which performs downlink communication with respect to a radio base station using a normal carrier and an additional carrier, comprising, a step of receiving a downlink control signal for notifying transmission of downlink data from the radio base station, and a step of receiving the downlink data based on the received downlink control signal, in which the downlink control signal includes a bit indicating assignment or non-assignment of the additional carrier, in addition to resource assignment information of the normal carrier.

A sixth characteristic of the present embodiment is summarized in that a mobile communication method in a mobile station, which performs uplink communication with respect to a radio base station using a normal carrier and an additional carrier, comprising, a step of transmitting a downlink control signal for instructing transmission of uplink data from the radio base station, and a step of transmitting the uplink data based on the received downlink control signal, in which the downlink control signal includes a bit indicating assignment or non-assignment of the additional carrier, in addition to resource assignment information of the normal carrier.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a diagram explaining downlink scheduling information in the mobile communication system according to the first embodiment of the present invention.
[Fig. 3] Fig. 3 is a diagram explaining "RB assignment information" of "Carrier Segment" or "Extension Carrier" according to the first embodiment of the present invention.
[Fig. 4] Fig. 4 is a diagram explaining an uplink scheduling grant in the mobile communication system according to the first embodiment of the present invention.
[Fig. 5] Fig. 5 is a diagram explaining "RB assignment information" of "Carrier Segment" or "Extension Carrier" according to the first embodiment of the present invention.
[Fig. 6] Fig. 6 is a diagram explaining the configuration of a mobile station UE according to the first embodiment of the present invention.
[Fig. 7] Fig. 7 is a diagram explaining the configuration of a radio base station eNB according to the first embodiment of the present invention.
[Fig. 8] Fig. 8 is a flowchart explaining the mobile communication method according to the first embodiment of the present invention.
[Fig. 9] Fig. 9 is a table deciding the size of a resource block group for resource assignment of a normal "Component Carrier" in the conventional art.
[Fig. 10] Fig. 10 is a diagram explaining an example of resource assignment of the normal "Component Carrier" in the conventional art.
[Fig. 11] Fig. 11 is a diagram explaining a problem regarding resource assignment of "Carrier Segment", which is to be solved by the present invention.

### BEST MODES FOR CARRYING OUT THE INVENTION

### (Mobile communication system according to first embodiment of the present invention)

Hereinafter, a mobile communication system according to a first embodiment of the present invention will be described with reference to the accompanying drawings. Throughout all the drawings for explaining the present embodiment, elements having the same function will be designated by the same reference numerals, and repetitive explanation thereof will be omitted.

In addition, in the following description, "Carrier Segment" or "Extension Carrier" is defined as a "small carrier added in order to effectively use a frequency resource", and will be called "Carrier Segment/Extension Carrier" as a general name.

Thus, the "Carrier Segment/Extension Carrier" may be "Carrier Segment" or may be "Extension Carrier".

With reference to Fig. 1, the mobile communication system including a mobile station UE and a radio base station eNB according to the present embodiment will be described.

The mobile communication system according to the present embodiment, for example, is a system employing "Evolved UTRA and UTRAN (another name: Long Term Evolution or Supper 3G)" scheme or an LTE-Advanced scheme.

As illustrated in Fig. 1, the mobile communication system according to the present embodiment includes a radio base station eNB and a mobile station UE communicating with the radio base station eNB.

In the mobile communication system according to the present embodiment, as a radio access scheme, an "OFDMA (Orthogonal Frequency Division Multiplexing Access) scheme" is applied to a downlink, and an "SC-FDMA (Single-Carrier Frequency Division Multiple Access) scheme" is applied to an uplink.

As described above, the OFDMA scheme is a multicarrier transmission scheme in which a frequency band is divided into a plurality of narrow frequency bands (sub-carriers) and data is mapped to each sub-carrier, so that communication is performed. Furthermore, the SC-FDMA scheme is a single carrier transmission scheme in which a frequency band is divided for each mobile station UE, and a plurality of mobile stations UEs use frequency bands different from one another, so that interference among the mobile stations UEs is reduced.

In addition, in the mobile communication system according to the present embodiment, "Carrier Aggregation" is configured to be performed.

Specifically, for a downlink, communication using a plurality of "Component Carriers" is performed. Here, the "Component Carrier" corresponds to one system carrier in an LTE scheme. That is, in the LTE scheme, communication is performed using one "Component Carrier", but in an LTE-Advanced scheme, communication may be performed using two or more "Component Carriers".

Even for an uplink, communication may be performed using two or more "Component Carriers".

Hereinafter, a communication channel used in the "Evolved UTRA and UTRAN (LTE)" scheme will be described. In addition, the following communication channel is also used in the LTE-Advanced scheme.

For a downlink, a "physical downlink shared channel (PDSCH)" and a "physical downlink control channel (PDCCH)" shared by each mobile station UE are used.

The "physical downlink shared channel (PDSCH)" is used to transmit downlink user data (downlink data), that is, a normal data signal.

Here, the data signal includes best effort type packet data, streaming type packet data, a control signal, and the like. The best effort type packet data includes packet data for transmitting/receiving an e-mail, packet data for Web browsing, and the like. Furthermore, the data signal may include a sound signal and the like by VoIP and the like.

Furthermore, the control signal, for example, corresponds to an RRC message, and may correspond to DCCH (Dedicated Control Channel) as a logical channel.

Furthermore, the PDCCH is used to notify information (that is, downlink scheduling information) on an ID of a mobile station UE performing communication using the PDSCH or a transport format of user data, information (that is, an uplink scheduling grant) on an ID of a mobile station UE performing communication using PUSCH (Physical Uplink Shared Channel) or a transport format of user data, and the like.

The PDCCH may also be called "Downlink L1/L2 Control Channel". Furthermore, the "downlink scheduling information" or the "uplink scheduling grant" may also be collectively called "downlink control information (DCI)".

Fig. 2 illustrates an example of information elements included in the downlink scheduling information. As illustrated in Fig. 2, the downlink scheduling information, for example, may include information elements such as "Format Indicator", "RB assignment information", "MCS information", "HARQ process information", "New Data Indicator", "TPC bit", or "RNTI/CRC". In addition, since the information elements are for illustrative purposes only, other information elements may also be included or only a part of the information elements may also be included.

The "Format Indicator" denotes information indicating whether the PDCCH is information for an uplink or information for a downlink.

The "RB assignment information" denotes information indicating assignment information of a resource block regarding a downlink signal designated by the PDCCH.

The "MCS information" denotes information indicating information about MCS regarding the downlink signal designated by the PDCCH.

The "HARQ process information" denotes information indicating information on an HARQ process of the downlink signal designated by the PDCCH.

The "New Data Indicator" denotes information indicating whether the downlink signal designated by the PDCCH is newly transmitted or is retransmitted.

The "TPC bit" denotes information for transmission power control of an uplink control signal designated by the PDCCH. The "RNTI/CRC" denotes a UE ID and a CRC bit.

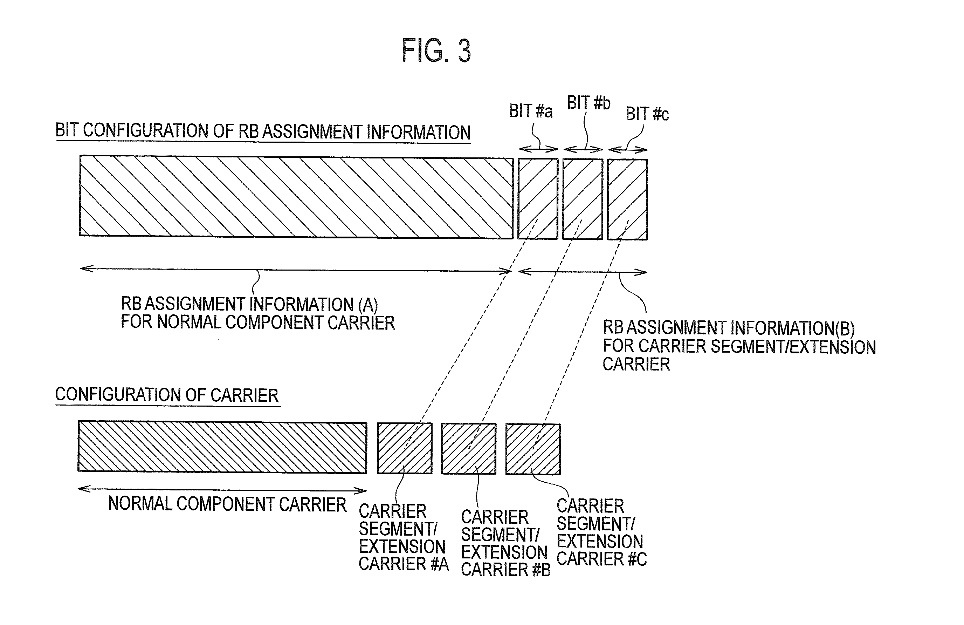

With reference to Fig. 3, the "RB assignment information" will be described more specifically. As illustrated in Fig. 3, the "RB assignment information" includes "RB assignment information" (part A illustrated in Fig. 3) for the normal "Component Carrier", and "RB assignment information" (part B illustrated in Fig. 2) for the "Carrier Segment/Extension Carrier".

Here, the "RB assignment information" (part A illustrated in Fig. 3) for the normal "Component Carrier", for example, may be equal to "RB (Resource Block) assignment information" defined in "7.1.6 Resource allocation" of TS 36.213 of the 3GPP.

Furthermore, in relation to the "RB assignment information" (part B illustrated in Fig. 3) for the "Carrier Segment/Extension Carrier", a predetermined number of bits may be defined for one "Carrier Segment/Extension Carrier", and resource assignment may be instructed by the bits.

For example, as illustrated in Fig. 3, when there exist "Carrier Segment/Extension Carrier #A", "Carrier Segment/Extension Carrier #B", and "Carrier Segment/Extension Carrier #C", bit #a, bit #b, and bit #c may be defined, respectively, and assignment of the "Carrier Segment/Extension Carrier #A", the "Carrier Segment/Extension Carrier #B", and the "Carrier Segment/Extension Carrier #C" may be instructed by the bit #a, the bit #b, and the bit #c, respectively.

More specifically, when the number of RBs of the "Carrier Segment/Extension Carrier #A" is "6" and the bit #a is 1 bit, in the case of "the bit #a = 0", it may be defined that there is resource assignment in the "Carrier Segment/Extension Carrier #A", that is, a PDSCH signal is transmitted in the 6 RBs of the "Carrier Segment/Extension Carrier #A". In the case of "the bit #a = 1", it may be defined that there is no resource assignment in the "Carrier Segment/Extension Carrier #A", that is, the PDSCH signal is not transmitted in the 6 RBs of the "Carrier Segment/Extension Carrier #A".

Even in relation to the "Carrier Segment/Extension Carrier #B" or the "Carrier Segment/Extension Carrier #C" and the "bit #b" or the "bit #c", the same resource assignment designation method may be defined.

In addition, in the above-mentioned example, the case in which the number of the RBs of the "Carrier Segment/Extension Carrier" is "6" has been described. However, even in relation to "Carrier Segment/Extension Carrier" having the number of RBs other than "6", resource assignment may be performed in the same manner.

Furthermore, in the above-mentioned example, 1 bit has been defined for the "Carrier Segment/Extension Carrier". However, 2 bits or more may be defined.

For example, when the number of the RBs of the "Carrier Segment/Extension Carrier" is "6", the RBs may be divided into two, that is, 3 RBs and 3 RBs, and 1 bit may be defined for each of the 3 RBs and the 3 RBs. In this case, it is possible to assign RBs more finely and flexibly.

Furthermore, in the above-mentioned example, the number of the "Carrier Segment/Extension Carriers" is "3". However, the number of the "Carrier Segment/Extension Carriers" may be other numbers other than "3".

As described above, while the normal "Component Carrier" and the "Carrier Segment/Extension Carrier" are regarded as one carrier, resource assignment is not performed, but while a bit for designating resource assignment regarding the "Carrier Segment/Extension Carrier" is newly added, whether there is resource assignment of the "Carrier Segment/Extension Carrier" is designated by the value of the bit, so that it is possible to avoid inefficient resource assignment due to a difference in the resource block sizes, resulting in the achievement of system efficiency.

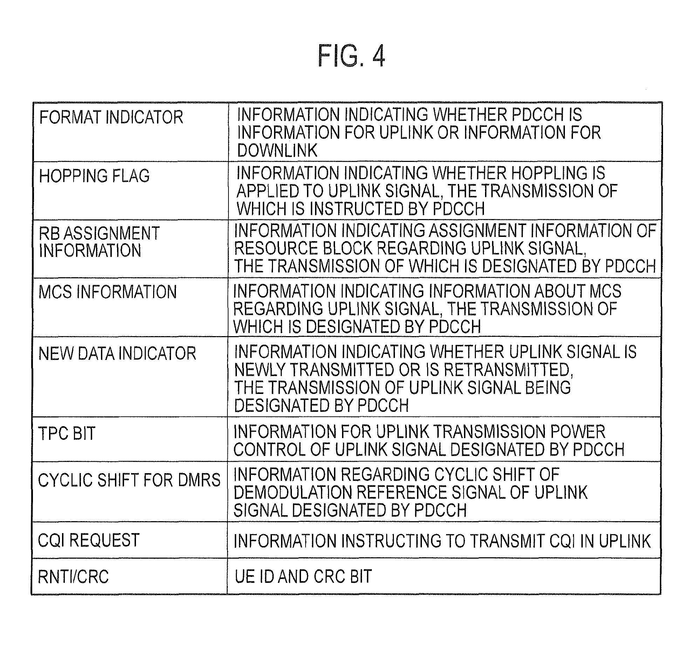

Fig. 4 illustrates an example of information elements included in the uplink scheduling grant. As illustrated in Fig. 4, the uplink scheduling grant, for example, may include information elements such as "Format Indicator", "Hopping flag", "RB assignment information", "MCS information", "New Data Indicator", "TPC bit", "Cyclic shift for DMRS", "CQI request" or "RNTI/CRC". In addition, since the information elements are for illustrative purposes only, other information elements may also be included or only a part of the information elements may also be included.

The "Format Indicator" denotes information indicating whether the PDCCH is information for an uplink or information for a downlink.

The "Hopping flag" denotes information indicating whether hoppling is applied to an uplink signal, the transmission of which is instructed by the PDCCH.

The "RB assignment information" denotes information indicating assignment information of a resource block regarding the uplink signal, the transmission of which is instructed by the PDCCH.

The "MCS information" denotes information indicating information about MCS regarding the uplink signal, the transmission of which is instructed by the PDCCH.

The "New Data Indicator" denotes information indicating whether the uplink signal is newly transmitted or is retransmitted, the transmission of the uplink signal being instructed by the PDCCH.

The "TPC bit" denotes information for uplink transmission power control of the uplink signal designated by the PDCCH.

The "Cyclic shift for DMRS" denotes information regarding Cyclic shift of Demodulation Reference signal of the uplink signal designated by the PDCCH.

The "CQI request" denotes information instructing that CQI is transmitted in an uplink. The "RNTI/CRC" denotes a UE ID and a CRC bit.

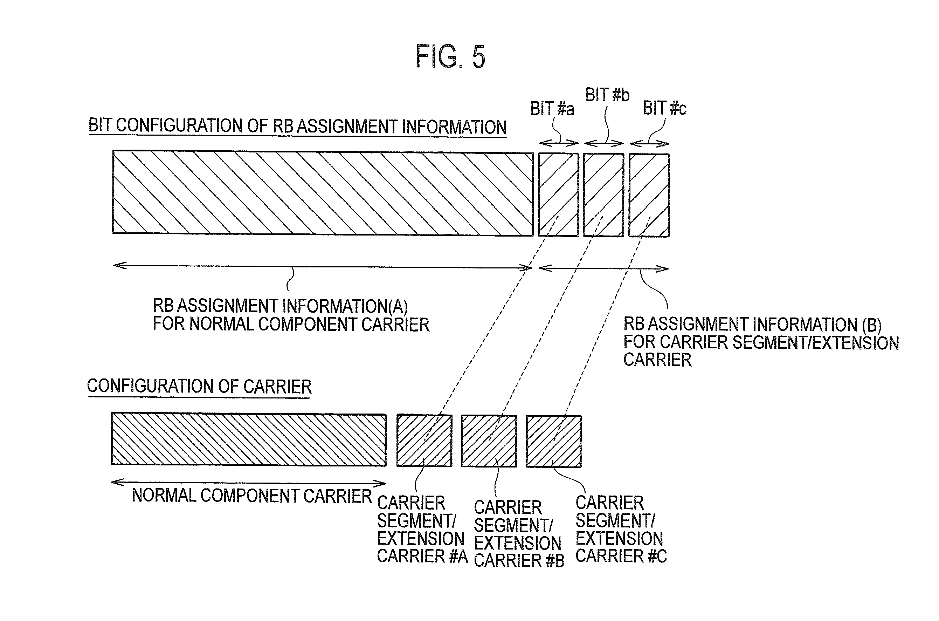

With reference to Fig. 5, the "RB assignment information" will be described more specifically. As illustrated in Fig. 5, the "RB assignment information" includes "RB assignment information (part A illustrated in Fig. 5)" for the normal "Component Carrier", and "RB assignment information (part B illustrated in Fig. 5)" for the "Carrier Segment/Extension Carrier".

Here, the "RB assignment information (part A illustrated in Fig. 5)" for the normal "Component Carrier", for example, may be equal to "RB (Resource Block) assignment information" defined in "8.1 Resource Allocation for PDCCH DCI Format 0" of TS 36.213 of the 3GPP.

Furthermore, in relation to the "RB assignment information (part B illustrated in Fig. 5)" for the "Carrier Segment/Extension Carrier", a predetermined number of bits may be defined for one "Carrier Segment/Extension Carrier", and resource assignment may be instructed by the bits.

For example, as illustrated in Fig. 5, when there exist "Carrier Segment/Extension Carrier #A", "Carrier Segment/Extension Carrier #B", and "Carrier Segment/Extension Carrier #C", "bit #a", "bit #b", and "bit #c" may be defined, respectively, and assignment of the "Carrier Segment/Extension Carrier #A", the "Carrier Segment/Extension Carrier #B", and the "Carrier Segment/Extension Carrier #C" may be instructed by the "bit #a", the "bit #b", and the "bit #c", respectively.

More specifically, when the number of RBs of the "Carrier Segment/Extension Carrier #A" is "6" and the "bit #a" is 1 bit, in the case of "the bit #a = 0", it may be defined that there is resource assignment in the "Carrier Segment/Extension Carrier #A", that is, the PDSCH signal is transmitted in the 6 RBs of the "Carrier Segment/Extension Carrier #A". In the case of "the bit #a = 1", it may be defined that there is no resource assignment in the "Carrier Segment/Extension Carrier #A", that is, the PDSCH signal is not transmitted in the 6 RBs of the "Carrier Segment/Extension Carrier #A".

Even in relation to the "Carrier Segment/Extension Carrier #B" or the "Carrier Segment/Extension Carrier #C" and the "bit #b" or the "bit #c", the same resource assignment designation method may be defined.

In addition, in the above-mentioned example, the case in which the number of the RBs of the "Carrier Segment/Extension Carrier" is "6" has been described. However, even in relation to "Carrier Segment/Extension Carrier" having the number of RBs other than "6", resource assignment may be performed in the same manner.

Furthermore, in the above-mentioned example, 1 bit has been defined for the "Carrier Segment/Extension Carrier". However, 2 bits or more may be defined.

For example, when the number of the RBs of the "Carrier Segment/Extension Carrier" is "6", the RBs may be divided into two, that is, 3 RBs and 3 RBs, and 1 bit may be defined for each of the 3 RBs and the 3 RBs. In this case, it is possible to assign RBs more finely and flexibly.

Furthermore, in the above-mentioned example, the number of the "Carrier Segment/Extension Carriers" is "3". However, the number of the "Carrier Segment/Extension Carriers" may be other numbers other than "3".

As described above, while the normal "Component Carrier" and the "Carrier Segment/Extension Carrier" are regarded as one carrier, resource assignment is not performed, but while a bit for designating resource assignment regarding the "Carrier Segment/Extension Carrier" is newly added, whether there is resource assignment of the "Carrier Segment/Extension Carrier" is designated by the value of the bit, so that it is possible to avoid inefficient resource assignment due to a difference in the resource block sizes, resulting in the achievement of system efficiency.

For an uplink, the PUSCH and the PUCCH shared and used by each mobile station UE are used. The PUSCH is used to transmit uplink user data (uplink data), that is, a normal data signal.

Furthermore, the PUCCH is used to transmit downlink quality information (CQI: Channel Quality Indicator), which is to be used in a scheduling process of the PDSCH or AMCS (Adaptive Modulation and Coding Scheme), and transmission acknowledgement information (Acknowledgement Information) of the PDSCH.

The downlink quality information may also be called CSI (Channel State Indicator) which is an indicator which groups together of CQI, PMI (Pre-coding Matrix Indicator), or RI (Rank Indicator).

Furthermore, the content of the transmission acknowledgement information is expressed by any one of a positive response (ACK: Acknowledgement) indicating that a transmission signal has been properly received, and a negative response (NACK: Negative Acknowledgement) indicating that the transmission signal has not been properly received.

In addition, when a transmission timing of the above-mentioned CQI or transmission acknowledgement information is equal to a transmission timing of the PUSCH, the CQI or the transmission acknowledgement information may also be multiplexed to the PUSCH for transmission.

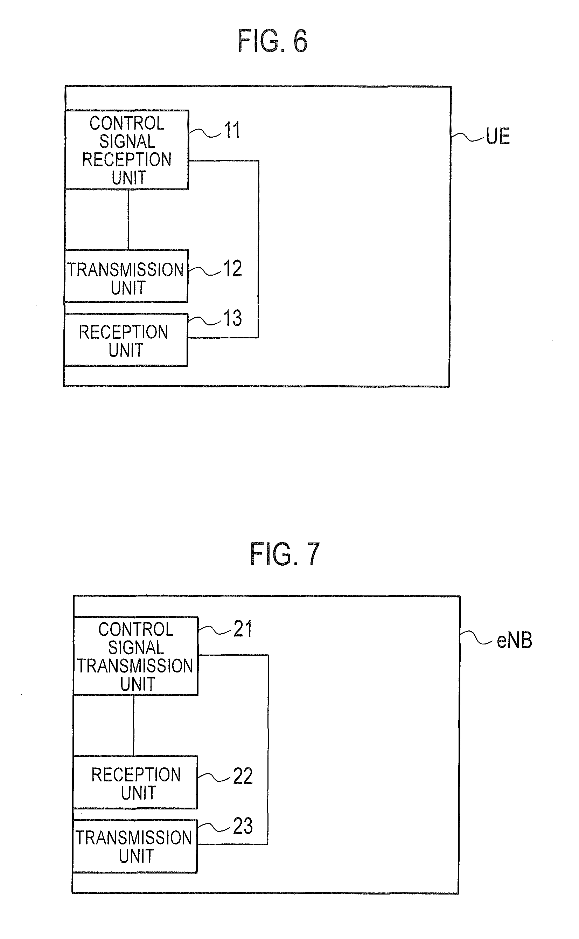

As illustrated in Fig. 6, the mobile station UE includes a control signal reception unit 11, a transmission unit 12, and a reception unit 13.

The control signal reception unit 11 is configured to receive a plurality of downlink control signals for instructing the transmission of uplink data (specifically, uplink data to be transmitted through the PUSCH), or the reception of downlink data (specifically, downlink data to be transmitted through the PDSCH).

Specifically, the control signal reception unit 11 may be configured to receive an "uplink scheduling grant" or "downlink scheduling information" through the PDCCH as the downlink control signal.

In the case of an uplink, the downlink control signal, for example, includes the information elements illustrated in Fig. 4 as parameters. In this case, the information element includes the "RB assignment information" described in Fig. 5.

Furthermore, in the case of a downlink, the downlink control signal, for example, includes the information elements illustrated in Fig. 2 as parameters. In this case, the information element includes the "RB assignment information" described in Fig. 3.

The transmission unit 12 is configured to transmit uplink data to the radio base station eNB based on the downlink control signal received in the control signal reception unit 11.

For example, when "bit #a = 0", "bit #b = 1", and "bit #c = 1" are notified as the values of the "bit #a", the "bit #b", and the "bit #c" illustrated in Fig. 5, the transmission unit 12 may be configured to transmit the uplink data using the "Carrier Segment/Extension Carrier #A", in addition to a resource block designated by the normal "Component Carrier".

In addition, when transmission in the resource block designated by the normal "Component Carrier" is not notified, the transmission unit 12 may be configured to transmit the uplink data using only the "Carrier Segment/Extension Carrier #A".

The reception unit 13 is configured to receive downlink data from the radio base station eNB based on the downlink control signal received in the control signal reception unit 11.

For example, when "bit #a = 0", "bit #b = 1", and "bit #c = 1" are notified as the values of the "bit #a", the "bit #b", and the "bit #c" illustrated in Fig. 3, the reception unit 13 may be configured to receive downlink data using the "Carrier Segment/Extension Carrier #A", in addition to a resource block designated by the normal "Component Carrier".

In addition, when reception in the resource block designated by the normal "Component Carrier" is not notified, the reception unit 13 may be configured to receive the downlink data using only the "Carrier Segment/Extension Carrier #A".

As illustrated in Fig. 7, the radio base station eNB includes a control signal transmission unit 21, a reception unit 22, and a transmission unit 23.

The control signal transmission unit 21 is configured to transmit one or a plurality of downlink control signals for instructing the transmission of uplink data (specifically, uplink data to be transmitted through the PUSCH), or for notifying the transmission of downlink data (specifically, downlink data to be transmitted through the PDSCH).

Specifically, the control signal transmission unit 21 may be configured to transmit an "uplink scheduling grant" or "downlink scheduling information" through the PDCCH as the downlink control signal.

In the case of an uplink, the downlink control signal, for example, includes the information elements illustrated in Fig. 4 as parameters. In this case, the information element includes the "RB assignment information" described in Fig. 5.

Furthermore, in the case of a downlink, the downlink control signal, for example, includes the information elements illustrated in Fig. 2 as parameters. In this case, the information element includes the "RB assignment information" described in Fig. 3.

The reception unit 22 is configured to receive uplink data transmitted by the mobile station UE using a plurality of carriers based on one or plurality of downlink control signals.

For example, when "bit #a = 0", "bit #b = 1", and "bit #c = 1" are notified as the values of the "bit #a", the "bit #b", and the "bit #c" illustrated in Fig. 5 in the "RB assignment information" of the "Carrier Segment/Extension Carrier" of the uplink scheduling grant, the reception unit 22 may be configured to receive uplink data using the "Carrier Segment/Extension Carrier #A", in addition to a resource block designated by the normal "Component Carrier".

In addition, when transmission in the resource block designated by the normal "Component Carrier" is not notified, the reception unit 22 may be configured to receive the uplink data using only the "Carrier Segment/Extension Carrier #A".

The transmission unit 23 is configured to transmit downlink data to the mobile station UE using one or a plurality of carriers designated by the plurality of downlink control signals.

For example, when "bit #a = 0", "bit #b = 1", and "bit #c = 1" are notified as the values of the "bit #a", the "bit #b", and the "bit #c" illustrated in Fig. 5 in the "RB assignment information" of the "Carrier Segment/Extension Carrier" of the downlink scheduling information, the transmission unit 23 may be configured to transmit the downlink data using the "Carrier Segment/Extension Carrier #A", in addition to a resource block designated by the normal "Component Carrier".

In addition, when transmission in the resource block designated by the normal "Component Carrier" is not notified, the transmission unit 22 may be configured to transmit the downlink data using only the "Carrier Segment/Extension Carrier #A".

As described above, while the normal "Component Carrier" and the "Carrier Segment/Extension Carrier" are regarded as one carrier, resource assignment is not performed, but while a bit for designating resource assignment regarding the "Carrier Segment/Extension Carrier" is newly added, whether there is resource assignment of the "Carrier Segment/Extension Carrier" is designated by the value of the bit, so that it is possible to avoid inefficient resource assignment due to a difference in the resource block sizes, resulting in the achievement of system efficiency.

With reference to Fig. 8, the operation of the mobile station UE according to the present embodiment will be described.

As illustrated in Fig. 8, in step S101, the mobile station UE determines whether the "bit #a" has a value of "0", which indicates assignment information regarding the "Carrier Segment/Extension Carrier #A" in the "RB assignment information" included in the downlink scheduling information.

When the "bit #a" has a value of "0" (step S101: YES), the present operation proceeds to step S102. In another case (step S101: NO), the present operation proceeds to step S103.

In step S102, the mobile station UE determines that there is resource block assignment in the "Carrier Segment/Extension Carrier #A", and performs downlink reception in the "Carrier Segment #A".

In step S103, the mobile station UE determines that there is no resource block assignment in the "Carrier Segment/Extension Carrier #A", and does not perform the downlink reception in the "Carrier Segment #A".

In addition, in the above-mentioned example, the operation of the mobile station UE in the assignment of the "Carrier Segment/Extension Carrier" in the downlink has been described. Instead, the same operation may be also applied to the assignment of the "Carrier Segment/Extension Carrier" in the uplink.

In this case, in step S102, the mobile station UE determines that there is resource block assignment in the "Carrier Segment/Extension Carrier #A", and performs uplink transmission in the "Carrier Segment/Extension Carrier #A". In step S103, the mobile station UE determines that there is no resource block assignment in the "Carrier Segment/Extension Carrier #A", and does not perform the uplink transmission in the "Carrier Segment/Extension Carrier #A".

The characteristics of the present embodiment as described above may be expressed as follows.

A first characteristic of the present embodiment is summarized in that a mobile station UE, which is configured to perform downlink communication with respect to a radio base station eNB using a normal "Component Carrier" (a normal carrier) and "Carrier Segment/Extension Carrier" (an additional carrier), includes: a control signal reception unit 11 configured to receive a downlink control signal for notifying the transmission of downlink data from the radio base station eNB; and a reception unit 13 configured to receive the downlink data based on the received downlink control signal, wherein the downlink control signal includes bits (bits #a to #c constituting part B illustrated in Fig. 3) indicating the assignment or non-assignment of the "Carrier Segment/Extension Carrier", in addition to resource assignment information "RB assignment information (part A illustrated in Fig. 3)" of the normal "Component Carrier".

A second characteristic of the present embodiment is summarized in that a mobile station UE, which is configured to perform uplink communication with respect to a radio base station eNB using a normal "Component Carrier" and "Carrier Segment/Extension Carrier", includes: a control signal reception unit 11 configured to receive a downlink control signal for instructing the transmission of uplink data from the radio base station eNB; and a transmission unit 12 configured to transmit uplink data based on the received downlink control signal, wherein the downlink control signal includes bits (bits #a to #c constituting part B illustrated in Fig. 5) indicating the assignment or non-assignment of the "Carrier Segment/Extension Carrier", in addition to resource assignment information "RB assignment information (part A illustrated in Fig. 5)" of the normal "Component Carrier".

A third characteristic of the present embodiment is summarized in that a radio base station eNB, which is configured to perform downlink communication with respect to a mobile station UE using a normal "Component Carrier" and "Carrier Segment/Extension Carrier", includes: a control signal transmission unit 21 configured to transmit a downlink control signal for notifying the transmission of downlink data to the mobile station UE; and a transmission unit 23 configured to transmit the downlink data, wherein the downlink control signal includes bits (bits #a to #c constituting part B illustrated in Fig. 3) indicating the assignment or non-assignment of the "Carrier Segment/Extension Carrier", in addition to resource assignment information "RB assignment information (part A illustrated in Fig. 3)" of the normal "Component Carrier".

A fourth characteristic of the present embodiment is summarized in that a radio base station eNB, which is configured to perform uplink communication with respect to a mobile station UE using a normal "Component Carrier" and "Carrier Segment/Extension Carrier", includes: a control signal transmission unit 21 configured to transmit a downlink control signal for instructing the transmission of uplink data to the mobile station UE; and a reception unit 22 configured to receive the uplink data, wherein the downlink control signal includes bits (bits #a to #c constituting part B illustrated in Fig. 5) indicating the assignment or non-assignment of the "Carrier Segment/Extension Carrier", in addition to resource assignment information "RB assignment information (part A illustrated in Fig. 5)" of the normal "Component Carrier".

A fifth characteristic of the present embodiment is summarized in that a mobile communication method in a mobile station UE, which performs downlink communication with respect to a radio base station eNB using a normal "Component Carrier" and "Carrier Segment/Extension Carrier", includes: a step of receiving a downlink control signal for notifying the transmission of downlink data from the radio base station eNB; and a step of receiving the downlink data based on the received downlink control signal, wherein the downlink control signal includes bits (bits #a to #c constituting part B illustrated in Fig. 3) indicating the assignment or non-assignment of the "Carrier Segment/Extension Carrier", in addition to resource assignment information "RB assignment information (part A illustrated in Fig. 3)" of the normal "Component Carrier".

A sixth characteristic of the present embodiment is summarized in that a mobile communication method in a mobile station UE, which performs uplink communication with respect to a radio base station eNB using a normal "Component Carrier" and "Carrier Segment/Extension Carrier", includes: a step of transmitting a downlink control signal for instructing the transmission of uplink data from the radio base station eNB; and a step of transmitting the uplink data based on the received downlink control signal, wherein the downlink control signal includes bits (bits #a to #c constituting part B illustrated in Fig. 5) indicating the assignment or non-assignment of the "Carrier Segment/Extension Carrier", in addition to resource assignment information "RB assignment information (part A illustrated in Fig. 5)" of the normal "Component Carrier".

It is noted that the operation of the above-described the radio base station eNB or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station eNB or the mobile station UE. Further, such a storage medium or a processor may be arranged, as a discrete component, in the radio base station eNB or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a mobile station, a radio base station, and a mobile communication method, by which it is possible to achieve system efficiency by efficiently assigning a resource in "Carrier Segment" or "Extension Carrier" added in order to effectively use a frequency resource.

## Claims

1. A mobile station, which is configured to perform downlink communication with respect to a radio base station using a normal carrier and an additional carrier, comprising:
a control signal reception unit configured to receive a downlink control signal for notifying transmission of downlink data from the radio base station; and
a reception unit configured to receive the downlink data based on the received downlink control signal, wherein
the downlink control signal includes a bit indicating assignment or non-assignment of the additional carrier, in addition to resource assignment information of the normal carrier.

2. A mobile station, which is configured to perform uplink communication with respect to a radio base station using a normal carrier and an additional carrier, comprising:
a control signal reception unit configured to receive a downlink control signal for instructing transmission of uplink data from the radio base station; and
a transmission unit configured to transmit the uplink data based on the received downlink control signal, wherein
the downlink control signal includes a bit indicating assignment or non-assignment of the additional carrier, in addition to resource assignment information of the normal carrier.

3. A radio base station, which is configured to perform downlink communication with respect to a mobile station using a normal carrier and an additional carrier, comprising:
a control signal transmission unit configured to transmit a downlink control signal for notifying transmission of downlink data to the mobile station; and
a transmission unit configured to transmit the downlink data, wherein
the downlink control signal includes a bit indicating assignment or non-assignment of the additional carrier, in addition to resource assignment information of the normal carrier.

4. A radio base station, which is configured to perform uplink communication with respect to a mobile station using a normal carrier and an additional carrier, comprising:
a control signal transmission unit configured to transmit a downlink control signal for instructing transmission of uplink data to the mobile station; and
a configured to receive the uplink data, wherein
the downlink control signal includes a bit indicating assignment or non-assignment of the additional carrier, in addition to resource assignment information of the normal carrier.

5. A mobile communication method in a mobile station, which performs downlink communication with respect to a radio base station using a normal carrier and an additional carrier, comprising:
a step of receiving a downlink control signal for notifying transmission of downlink data from the radio base station; and
a step of receiving the downlink data based on the received downlink control signal, wherein
the downlink control signal includes a bit indicating assignment or non-assignment of the additional carrier, in addition to resource assignment information of the normal carrier.

6. A mobile communication method in a mobile station, which performs uplink communication with respect to a radio base station using a normal carrier and an additional carrier, comprising:
a step of transmitting a downlink control signal for instructing transmission of uplink data from the radio base station; and
a step of transmitting the uplink data based on the received downlink control signal, wherein
the downlink control signal includes a bit indicating assignment or non-assignment of the additional carrier, in addition to resource assignment information of the normal carrier.
